**Europäisches Patentamt**

**European Patent Office**

**Office européen des brevets**

(11) Veröffentlichungsnummer: **0 008 756**
**B1**

# (12) EUROPÄISCHE PATENTSCHRIFT

(45) Veröffentlichungstag der Patentschrift:
**30.12.81**

(21) Anmeldenummer: **79103140.4**

(22) Anmeldetag: **27.08.79**

(51) Int. Cl.³: **G 03 B 41/18**

(54) **Röntgenfilmkassette.**

(30) Priorität: **31.08.78 DE 2838058**
**29.12.78 DE 2856703**

(43) Veröffentlichungstag der Anmeldung:
**19.03.80 Patentblatt 80/6**

(45) Bekanntmachung des Hinweises auf die Patenterteilung:
**30.12.81 Patentblatt 81/52**

(84) Benannte Vertragsstaaten:
**BE FR GB IT NL SE**

(56) Entgegenhaltungen:
**DE-C- 342 035**
**DE-C- 825 947**

(73) Patentinhaber: **Agfa-Gevaert AG,**
**D-5090 Leverkusen 1 (DE)**

(72) Erfinder: **Kröbel, Heinz, Ahornring 49, D-8021 Taufkirchen**
**(DE)**
Erfinder: **Bauer, Walter, Heinr.-Wieland-Strasse 178,**
**D-8000 München 83 (DE)**
Erfinder: **Schmidt, Manfred, Neusatzerstrasse 2,**
**D-8000 München 82 (DE)**

Röntgenfilmkassette

Die Erfindung betrifft eine Röntgenfilmkassette mit zwei einen lichtdichten Raum umschliessenden Kassettenhälften.

Bei Röntgenfilmkassetten hat es sich oft als nachteilig erwiesen, nicht erkennen zu können, ob die Kassette mit einem Film beladen ist oder nicht. Es sind dabei oft Irrtümer entstanden, wobei entweder eine leere Kassette zu einer Aufnahme verwendet oder bei automatischen Be- und Entladesystemen eine Kassette zweimal beladen worde ist. In jedem Fall musste die beabsichtigte Aufnahme wiederholt werden.

Aus der DE-PS 825 947 ist eine Vorrichtung zur Anzeige des Ladezustandes einer fotografischen Kassette für Platten bekannt, welche ein gegenüber der Kassettenaussenseite bewegliches Element aufweist, das bei Beladung der Kassette eine erste und bei Nichtbeladung eine zweite wahrnehmbare Lage einnimmt.

Eine solche Vorrichtung ist jedoch nur im Zusammenhang mit starren Platten anwendbar. Ein Röntgenfilm würde aufgrund seiner Flexibilität von dieser Vorrichtung nicht angezeigt werden.

Aufgabe der Erfindung ist es daher, eine Röntgenfilmkassette der eingangs genannten Art derart auszubilden, dass eine Erkennung von flexiblen Filmen mit Hilfe eines solchen beweglichen Elementes möglich ist.

Diese Aufgabe wird durch die im Kennzeichen des Anspruchs 1 beschriebene Erfindung gelöst.

Mit der Erfindung wird erreicht, dass der Film am Rande der Vertiefung aufliegt und somit einen ausreichenden Widerstand gegenüber dem beweglichen Element bringt. Der Ladezustand einer Kassette wird somit über das bewegliche Element ausserhalb der Kassette sowohl sichtbar als auch tastbar.

In einer zweckmässigen Ausgestaltung der Erfindung wird diese Filmanzeige in einer Ausnehmung für das Patienten-Identifizierungsfenster vorgesehen, da an dieser Stelle die Verstärkerfolien ohnehin ausgespart sind, was zur Erkennung der Filmbeladung notwendig ist.

Bei manchen Anwendungsfällen werden aber auch Röntgenfilmkassetten mit flexiblen Kassettenteilen als sog. Vakuumkassetten verwendet. Für solche Vakuumkassetten wird eine weitere Ausgestaltung einer Anzeige vorgeschlagen, mit der eine Vakuumdichtigkeit gewährleistet sein soll. Diese Anzeige zeichnet sich dadurch aus, dass das bewegliche Element mit einem an der Innenwand eines Kassettenteils angebrachten, gummielastischen Organ in Verbindung steht und dass im Bereich des beweglichen Elementes dieser Kassettenteil eine nach aussen weisende Erhebung aufweist. Damit kann auch beispielsweise bei Mammographie-Kassetten mit flexiblen Kassettenwänden der Ladezustand der Kassette von aussen erkannt werden.

Weitere Einzelheiten und Vorteile der Erfindung ergeben sich aus den Unteransprüchen im Zusammenhang mit der Beschreibung von Ausführungsbeispielen, die anhand von Figuren eingehend erläutert sind. Es zeigen:

Figur 1 einen Querschnitt durch einen Teil einer unbeladenen Röntgenkassette mit der erfindungsgemässen Filmanzeige;

Figur 2 den in Figur 1 dargestellten Querschnitt bei beladener Kassette;

Figur 3 eine zweite Ausführungsform der in Figur 1 und 2 dargestellten Filmanzeige;

Figur 4 einen Querschnitt durch einen Teil einer unbeladenen Röntgenkassette gemäss einer dritten Ausführungsform;

Figur 5 die in Figur 4 dargestellte Röntgenkassette im beladenen Zustand;

Figur 6 einen Querschnitt durch eine weitere Ausgestaltung der erfindungsgemässen Anzeige im unbeladenen Zustand; und

Figur 7 die in Figur 6 dargestellte Anzeige im beladenen Zustand.

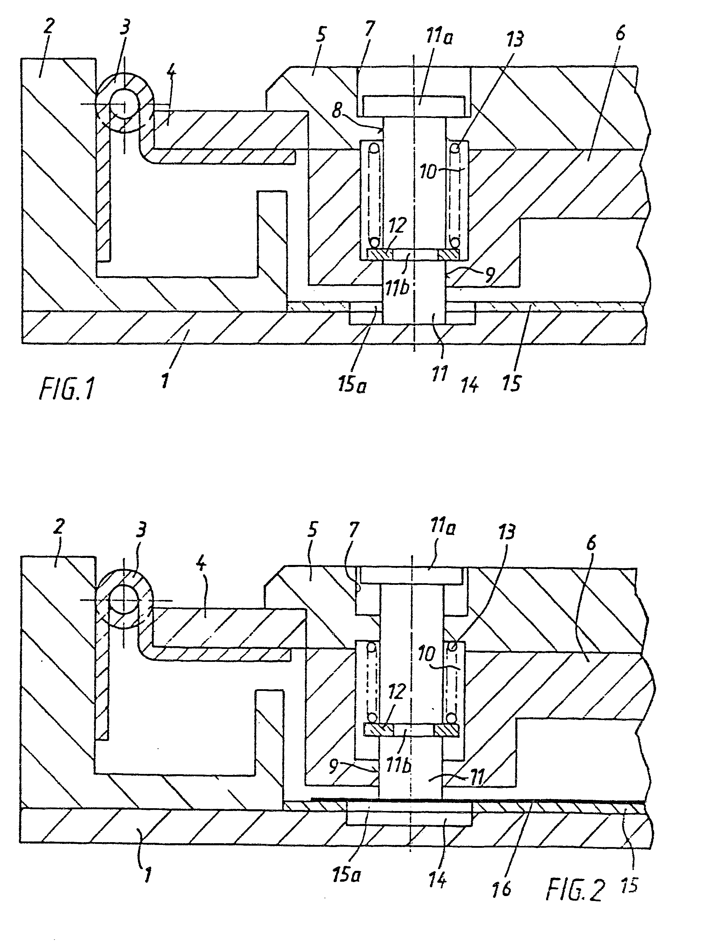

In Figur 1 ist mit 1 ein Kassettenboden bezeichnet, an welchem ein um den Rand verlaufender Rahmen 2 angebracht ist. Auf der Innenseite einer Rahmenseite 2 ist ein Scharnier 3 befestigt, das einen Deckel 4 trägt. In dem Kassettendeckel 4 ist ein Fensterrahmen 5 für die Patientendaten eingelassen, an dessen Innenseite ein Gegenstück 6 angebracht ist. Der Fensterrahmen 5 weist auf der Oberseite eine Vertiefung 7 auf, in welcher eine Bohrung 8 vorgesehen ist. In dem Gegenstück 6 ist an der Unterseite eine mit der Bohrung 8 fluchtende Bohrung 9 ausgeformt, welche sich im oberen, zu dem Fensterrahmen 5 weisenden Bereich des Gegenstückes 6 zu einer Ausnehmung 10 erweitert. In den Bohrungen 8 und 9 ist ein Anzeigebolzen 11 geführt, welcher eine in der Vertiefung 7 liegende Erweiterung 11a aufweist. In dem Bolzen 11 ist ferner eine Nut 11b ausgeformt, welche sich in der Ausnehmung 10 oberhalb der Bohrung 9 befindet. In der Nut 11b ist ein Ring 12, beispielsweise ein Seegerring, eingesetzt, der über den Bolzen 11 hinausragt. Zwischen dem Ring 12 und der Unterseite des Fensterrahmens 5 ist eine Druckfeder 13 um den Bolzen 11 angeordnet.

In dem Kassettenboden 1 ist ebenfalls eine Vertiefung 14 ausgeformt, in welcher die der Kopfseite 11a des Bolzens 11 gegenüberliegende Seite anliegt. Eine am Boden 1 liegende Verstärkerfolie 15 weist eine Aussparung 15a auf, die sich etwa mit der Vertiefung 14 deckt.

Die Wirkungsweise der anhand der Figur 1 beschriebenen Filmanzeige wird anhand der Figuren 1 und 2 deutlich. Bei fehlendem Film wird der Bolzen 11 augrund der Druckfeder 13 in die Vertiefung 14 gedrückt, so dass die Oberseite 11a des Bolzens 11 in der Vertiefung 7 versenkt ist. Durch Abtasten der Aussenseite des Fensterrahmens 5 kann die versenkte Lage des Bolzens 11 erkannt werden. Selbstverständlich ist diese Lage auch optisch wahrzunehmen. In Figur 2 ist ein Film 16 dargestellt, der auf die Verstärkerfolie 15 gelegt ist und die Aussparung 15a bzw. die Vertiefung 14 überdeckt. Dadurch wird beim Verschliessen der Kassette der Bolzen 11 gegen die Federkraft 13 nach oben gedrückt, so dass die Oberseite 11a etwa in einer Ebene mit der Aussenseite des Fensterrahmens 5 liegt. Durch Überstreichen des Fensterrahmens 5 kann die Beladung der Kassette abgetastet werden.

Bei dem beschriebenen Beispiel ist davon ausgegangen worden, dass die Filmanzeige in dem Patientendaten-Fenster integriert ist, was den Vorteil hat, dass die ohnehin vorhandene Aussparung der Verstärkerfolie an dieser Stelle ausgenützt werden kann. Selbstverständlich ist es auch möglich, unabhängig von dem Patientendaten-Fenster an einer anderen Stelle in der Kassette eine Anordnung in der beschriebenen Weise vorzusehen, wobei dann statt des Fensterrahmens 5 ein entsprechender Einsatz mit Gegenstück in den Kassettendeckel 4 eingelassen ist.

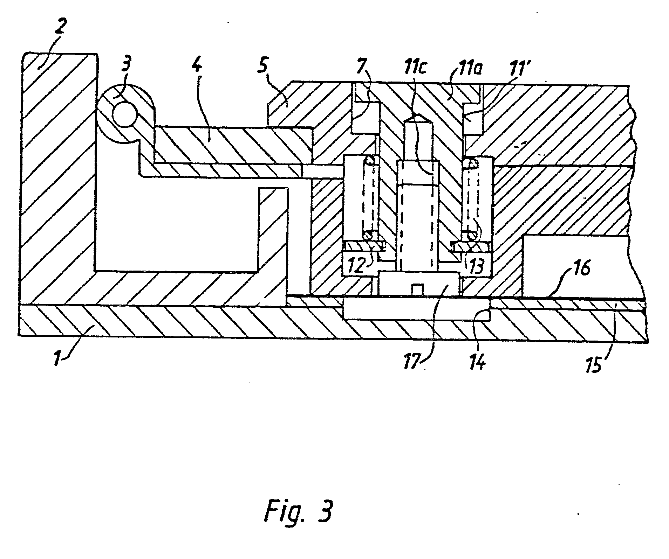

In Figur 3 ist eine andere Ausführungsform der Erfindung wiedergegeben, wobei gleiche Teile mit gleichen Bezugsziffern versehen sind. Hierbei ist ein Anzeigebolzen 11' vorgesehen, der gegenüber dem in Figur 1 gezeigten Bolzen kürzer ist. An der dem Film 15 bzw. der Vertiefung 14 zugewandten Seite des Bolzens 11' ist eine zur Bolzenachse koaxial verlaufende Bohrung mit Innengewinde 11c vorgesehen. In das Gewinde ist eine Justierschraube 17 eingedreht, welche die Anlagefläche in der Vertiefung 14 bzw. an dem Film 16 bildet. Es hat sich nämlich herausgestellt, dass der Abstand zwischen Kassettendeckel 4 und Kassettenboden 1 durch Fertigungs- und Montagetoleranzen mehr oder weniger schwanken kann. Um trotzdem eine zuverlässige Anzeige zu erhalten, kann durch Verdrehen der Schraube 17 ein Abstandsunterschied ausgeglichen werden.

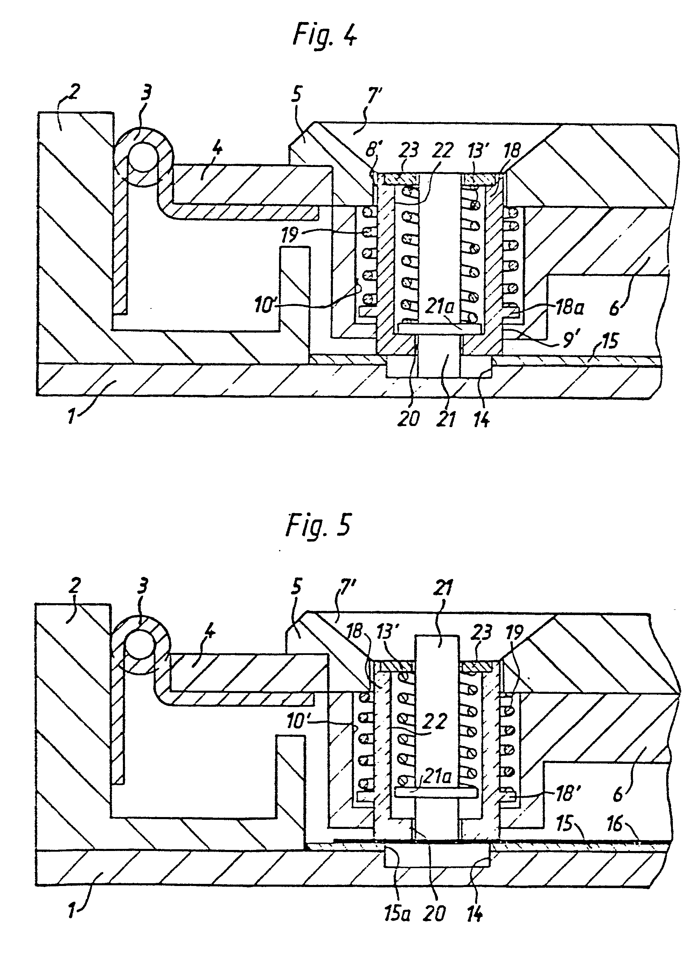

Eine dritte Ausführungsform ist in den Figuren 4 und 5 wiedergegeben, wobei ebenfalls gleiche Teile mit gleichen Bezugsziffern versehen sind. Bei dieser Ausführungsform sollen die Herstellungstoleranzen bezüglich der Abstände von Deckel und Boden automatisch ausgeglichen werden. Ausserdem ist hierbei eine Alternative in der Anzeige dargestellt.

In dem Fensterrahmen 5 ist eine kegelförmige Vertiefung 7' vorgesehen, welche in eine Bohrung 8' mündet. Das an der Unterseite des Fensterrahmens 5 befestigte Gegenstück 6 weist ähnlich wie Figur 1 und 2 an der Unterseite eine Bohrung 9' auf, welche mit der Bohrung 8' des Fensterrahmens 5 fluchtet. Zwischen den Bohrungen 8' und 9' ist in dem Gegenstück 6 ein erweiterter Raum 10' vorgesehen. In den Bohrungen 8' und 9' ist ein zylindrischer Führungskörper 18 geführt, welcher an seinem Aussenumfang einen ringförmigen Vorsprung 18a aufweist, der in dem erweiterten Raum 10' unmittelbar oberhalb der Bohrung 9' verläuft. Zwischen dem ringförmigen Vorsprung 18a und der Innenseite des Fensterrahmens 5 ist eine Druckfeder 19 angeordnet, welche den Führungskörper 18 in Anlage an den Boden 1 drückt. Auf der dem Kassettenboden 1 zugewandten Seite ist in dem Führungskörper 18 eine axiale Bohrung 20 ausgeformt, durch welche das eine Ende des Anzeigebolzens 21 geführt ist, welches in die Vertiefung 14 des Bodens 1 gerichtet ist. Im übrigen weist der Führungskörper 18 eine axiale zylindrische Ausnehmung 22 auf, welche im Durchmesser gegenüber der Bohrung 20 grösser ist und an dem durch die Bohrung 8' des Fensterrahmens 5 laufenden Ende mittels einer Ringscheibe 23 verschlossen ist. Die Ringscheibe 23 hat einen Innendurchmesser, der gleich ist der Bohrung 20 im Führungskörper 18, und führt das andere Ende des Anzeigebolzens 21. An dem Anzeigebolzen 21 ist ein ringförmiger Vorsprung 21a ausgeformt, welcher unmittelbar oberhalb der Bohrung 20 in der zylindrischen Ausnehmung 22 des Führungskörpers 18 verläuft. Zwischen dem ringförmigen Vorsprung 21a und der Ringscheibe 23 ist eine Druckfeder 13' angeordnet.

Die Wirkungsweise der anhand der Figuren 4 und 5 beschriebenen Ausgestaltungen der Erfindung ist nun folgendermassen: Bei Fehlen eines Filmes (Figur 4) wird der Anzeigebolzen 21 aufgrund der Federkraft 13' in die Vertiefung 14 des Kassettenbodens 1 gedrückt. Damit nimmt das im Fensterrahmen 5 liegende Ende des Anzeigebolzens gleiches Niveau mit der Ringscheibe 23 ein. Ein Abtasten der Vertiefung 7' lässt eine verhältnismässig glatte Fläche spüren. Bei eingelegtem Film 16 (Figur 5) wird der Bolzen nach dem Schliessen des Deckels 4 durch den Film nach oben gedrückt, so dass sich dieser über die Ringscheibe 23 hebt und leicht gefühlt werden kann. Eine farbliche Unterscheidung des Bolzen-Mantels gegenüber der Vertiefung 7' und der Scheibe 23 erleichtert die optische Erkennung des Be- bzw. Entladezustandes der Kassette.

Um die Abstandsunterschiede zwischen Deckel 4 und Kassettenboden 1 ausgleichen zu können, wird der Führungskörper 18 aufgrund der Kraft der Druckfeder 19 nach unten gedrückt, so dass dieser an dem Kassettenboden bzw. der Verstärkerfolie 15 ausserhalb der Aussparung 15a bzw. der Vertiefung 14 aufliegt. Damit ist ein gleichbleibender Abstand des Anzeigebolzens gegenüber der Vertiefung 14 gewährleistet bzw. der Bolzen 21 wird bei eingelegtem Film immer gleich weit aus dem Führungskörper 18 herausragen. Da der Bolzen 21 lediglich um 1–2 mm über den Führungskörper 18 herausragen soll, ist diese sogenannte schwimmende Aufhängung des Führungskörpers für eine sichere Anzeige sehr von Vorteil.

Ist der Abstand zwischen Deckel 4 und Boden 1 mit einem Minusmass behaftet, so wird der gesamte Führungskörper 18 etwas in die Vertiefung 7' hineingedrückt, bei eingelegtem Film bleibt aber dennoch der hervorstehende Anzeigebolzen 21 in gleichem Masse zu tasten.

Damit sichergestellt ist, dass bei eingelegtem Film der Bolzen alleine betätigt wird, ist die Kraft der Druckfeder 19 grösser als die der Druckfeder 13'.

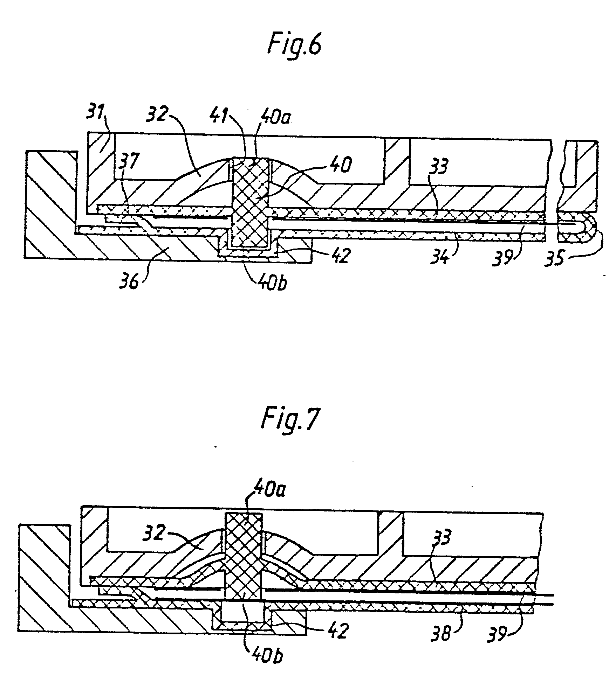

In Figur 6 ist mit 31 ein Kassettenboden bezeichnet, an welchem eine Kuppe 32 ausgeformt ist. Auf der Innenseite des Kassettenbodens ist die eine Hälfte eines flexiblen Organs als eine Kassettenwand angebracht, vorzugsweise angeklebt. Die andere Hälfte dieses Organs bildet die andere Kassettenwand 34, wobei das Organ an einer Seite um 180 Grad umgebogen ist und eine Art Scharnier 35 bildet. Die Gegenwand 34 ist in einem dreiseitigen Rahmen 36 befestigt, derart, dass nur die Seite mit dem Scharnier 35 ohne starre Rahmenleiste freiliegt. Auf der Innenseite der Gegenwand 34 ist als Begrenzung für den Film 38 und die Verstärkerfolie 39 eine Dichtlippe 37 ausgeformt, welche sich bei geschlossener Kassette umlegt und die Vakuumdichtigkeit gewährleistet.

In einem Randbereich des Kasetteninneren, in welchem ein eingelegter Film vorhanden, aber kein wesentlicher Bildteil zu erwarten ist, ist ein sich zu beiden Seiten des gummielastischen Organs 33 erstreckender Stöpsel 40 vorgesehen, der mit seinem nach aussen weisenden Ende durch eine Öffnung 41 in der Kuppe 32 ragt und mit seinem nach innen gerichteten Ende 40b in eine Vertiefung 42 in dem Rahmen 36 geführt ist. Die Länge des nach aussen weisenden Teiles 40a des Stöpsels 40 ist dabei so bemessen, dass bei Normallage des gummielastischen Organs 33 die Kuppe 32 mit der äusseren Stöpselfläche etwa eine Ebene bildet. Die Länge des nach innen ragenden Endes 40b ist so bemessen, dass die Filmebene, welche sich oberhalb der Vertiefung 42 befindet, um ein bis drei Millimeter überschritten wird. Das flexible Organ der Gegenwand 34 ist ebenfalls in die Vertiefung 42 gedrückt, so dass das Stöpselende 42b frei in dieser Vertiefung geführt werden kann. Die an der Innenseite der einen Kassettenhälfte 33 befestigte Verstärkerfolie 39 weist im Bereich des Stöpsels 40 eine Aussparung auf.

Sofern in der Kassette kein Film eingelegt ist, nimmt der Stöpsel die in Figur 6 dargestellte Stellung ein, wobei also das innere Stöpselende 40b in die Vertiefung 42 ragt und das äussere Stöpselende 40a in der Öffnung 41 der Kuppe 32 liegt. Beim Tasten ergibt sich somit etwa eine Kugeloberfläche. Sofern die Aussenfläche des Stöpselendes 40a und die Kuppe 32 gleiche Farbe haben, wird auf «kein Film» erkannt.

Ist nun ein Film 38 in der Kassette eingelegt, so ist die Vertiefung 42 von dem Film abgedeckt, so dass das Stöpselende 40b nicht in die Vertiefung 42 eindringen kann. Damit wird der gummielastische und vorzugsweise einstückig an dem gummielastischen Organ ausgeformte Stöpsel 40 in die in Figur 7 dargestellte Stellung gebracht, bei der das äussere Stöpselende 40a um ein bis drei Millimeter über die Kuppe 32 hinausragt. Dieses hervorstehende Ende kann dabei in der Dunkelkammer ertastet werden. Die Mantelfläche des Stöpsels 40 weist gegenüber der Kuppe eine andere Farbe auf, so dass auch optisch die Stellung des Stöpsels leicht erkennbar ist.

**Patentansprüche**

1. Röntgenfilmkassette mit zwei einen lichtdichten Raum umschliessenden Kassettenhälften, gekennzeichnet durch ein gegenüber der Kassettenaussenseite bewegliches Element (11, 11'; 21, 40), das bei Beladung der Kassette eine erste und bei Nichtbeladung eine zweite wahrnehmbare Lage einnimmt, wobei gegenüber dem in einer Kassettenhälfte, vorzugsweise dem Kassettendeckel (4; 41), geführten, beweglichen Element (11; 11'; 21; 40) eine Vertiefung (14; 42) in der anderen Kassettenhälfte (1; 36) vorgesehen ist, welche bei eingelegtem Film (16; 38) von diesem überdeckt ist und bei fehlendem Film das innere Ende des beweglichen Elementes aufnimmt.

2. Filmkassette nach Anspruch 1, dadurch gekennzeichnet, dass das bewegliche Element (11') in seiner Länge in Bewegungsrichtung veränderlich ist.

3. Filmkassette nach Anspruch 2, dadurch gekennzeichnet, dass die Längenveränderung mittels einer Justierschraube (17) vornehmbar ist.

4. Filmkassette nach Anspruch 1, dadurch gekennzeichnet, dass das bewegliche Element (21) mit einer Feder (13') in einem in gleicher Richtung beweglichen Führungskörper (18) untergebracht ist, welcher durch die Kraft einer weiteren, stärkeren Feder (19) gegen die andere Kassettenhälfte (1) gedrückt wird.

5. Filmkassette nach Anspruch 4, dadurch gekennzeichnet, dass der Führungskörper (18) in Ausnehmungen (8', 9') der einen Kassettenhälfte (4) und das bewegliche Element (21) einerseits in einer Ausnehmung (20) des Führungskörpers (18) und andererseits in einer Ringscheibe (23) geführt ist.

6. Filmkassette nach einem der Ansprüche 1 bis 5, dadurch gekennzeichnet, dass das bewegliche Element ein Bolzen oder Stift (21) ist, der in einer Lage in einer Senke (7') an der Kassettenaussenseite (5) ruht, in der anderen Lage aus dieser herausragt.

7. Filmkassette nach einem der Ansprüche 1 bis 5, dadurch gekennzeichnet, dass das bewegliche Element ein Bolzen oder Stift (11; 11') mit flachem Kopf (11a) ist, welcher in einer Lage in einer Senke (7) an der Kassettenaussenseite (5) versenkt ist, in der anderen Lage die Senke (7) ausfüllt.

8. Filmkassette nach einem der Ansprüche 1 bis 7, dadurch gekennzeichnet, dass das bewegliche Element (11; 11'; 21) mittels der Kraft einer Feder (13; 13') in seine zweite Lage und durch den Film (16) gegen die Federkraft (13; 13') in seine erste Lage gebracht ist.

9. Filmkassette nach Anspruch 1, dadurch gekennzeichnet, dass das bewegliche Element (40) mit einem an der Innenwand eines Kassettenteils (31) angebrachten, gummielastischen Organ (33) in Verbindung steht und dass im Bereich des beweglichen Elementes (40) dieser Kassettenteil (31) eine nach aussen weisende Erhebung (32) aufweist.

10. Filmkassette nach Anspruch 9, dadurch gekennzeichnet, dass das bewegliche Element (40) einstückig an dem gummielastischen Organ (33) angeformt ist.

11. Filmkassette nach Anspruch 9 oder 10, dadurch gekennzeichnet, dass das bewegliche Element (40) Zylinderform besitzt und sich beiderseits des plattenförmigen elastischen Organs (33) erstreckt.

12. Filmkassette nach Anspruch 11, dadurch gekennzeichnet, dass ein Ende (40a) des zylinderförmigen Elementes (40) durch eine Bohrung (41) in der Erhebung (32) des Kassettenteils (31) ragt und bei unbeladener Kassette etwa in einer Ebene mit der Aussenseite der Erhebung (32) liegt, während das andere Ende (40b) des Elementes (40) in der Vertiefung (42) des anderen Kassettenteils (36) ruht.

13. Filmkassette nach Anspruch 12, dadurch gekennzeichnet, dass sich bei beladener Kassette das gummielastische Organ (33) in die Erhebung (32) des Kassettenteils (31) hineinwölbt, wobei das nach aussen weisende Ende (40a) des beweglichen Elementes (40) über die Erhebung (32) tastbar hinausragt.

14. Filmkassette nach einem der Ansprüche 7 oder 12, dadurch gekennzeichnet, dass die zylindrische Fläche des beweglichen Elements (21; 40) andersfarbig gegenüber der Fläche der Senke (7; 41) bzw. gegenüber der Kassettenaussenfläche (5; 32) ist.

15. Filmkassette nach einem der Ansprüche 1 bis 14, dadurch gekennzeichnet, dass die Filmanzeige mit dem beweglichen Element (11; 11'; 21) in einem Fensterrahmen (5) für Patientendaten untergebracht ist.

## Claims

1. An X-ray film cassette comprising two halves which enclose a light-proof space, characterised by an element (11, 11', 21, 40) displaceable relative to the outside of the cassette, which when the cassette is loaded occupies a first and when the cassette is not loaded a second distinguishable position, the displaceable element (11; 11'; 21; 40) being guided in one half of the cassette, preferably in the cassette lid (4; 41) and a recess (14; 42) being provided opposite said element in the other half of the cassette (1; 36), which recess when a film (16; 38) is placed inside the cassette is overlaped thereby and in the absence of a film receives the inner end of the displaceable element.

2. A film cassette according to claim 1, characterised in that the displaceable element (11') is variable in its length in the direction of its displacement.

3. A film cassette according to claim 2, characterised in that the length variation is achieved by means of an adjusting screw (17).

4. A film cassette according to claim 1, characterised in that the displaceable element (21) is accommodated with a spring (13') in a guide piece (18) which is displaceable in like directions and which is pressed against the other half (1) of the cassette by the force of a further, stronger spring (19).

5. A film cassette according to claim 4, characterised in that the guide piece (18) is guided in recesses (8', 9') formed in one half (4) of the cassette, and the displaceable element (21) is guided on one side in a recess (20) formed in the guide piece (18) and on the other side in an annular disc (23).

6. A film cassette according to any of claims 1 to 5, characterised in that the displaceable element is a bolt or pin (21), which in one position rests in a depression (7') on the outside (5) of the cassette, and in the other position projects outwards from this depression.

7. A film cassette according to any of claims 1 to 5, characterised in that the displaceable element is a bolt or pin (11; 11') having a flat head (11a), which in one position is sunk in a depression (7) on the outside (5) of the cassette, and in the other position fills said depression (7).

8. A film cassette according to any of claims 1 to 7, characterised in that the displaceable element (11; 11'; 21) is brought into its second position by the force of a spring (13; 13') and into the first position by the film (16) in opposition to the spring force (13; 13').

9. A film cassette according to claim 1, characterised in that the displaceable element (40) is in connection with a rubber-elastic part (33) mounted on the inside wall of one cassette part (31), and that in the region of the displaceable element (40) the said cassette part (31) comprised an outwardly directed elevation (32).

10. A film cassette according to claim 9, characterised in that the displaceable element (40) is integrally onformed on the rubber-elastic part (33).

11. A film cassette according to claim 9 or 10, characterised in that the displaceable element (40) is of cylindrical form and extends on both sides of the platelike elastic part (33).

12. A film cassette according to Claim 11, characterised in that one end (40a) of the cylindrical element (40) extends through a bore (41) in the elevation (32) of the cassette part (31) being approximately in a common plane with the exterior side of said elevation (32) when the cassette is not loaded, whilst the other end (40b) of the element (40) rests in the recess (42) of the other cassette part (36).

13. A film cassette according to claim 12, characterised in that when the cassette is loaded the rubber-elastic part (33) domes out into the elevation (32) of the cassette part (31) with the outwardly directed end (40a) of the movable element (40) protruding tangibly over the said elevation (32).

14. A film cassette according to either of claims 7 to 12, characterised in that the cylindrical surface of the displaceable element (21; 40) is coloured differently from the surface of the depression (7; 41) or from the outside wall (5; 32) of the cassette.

15. A film cassette according to any of claims 1 to 14, characterised in that the film-identification with the displaceable element (11; 11'; 21) is accommodated in a window frame (5) for patient information data.

## Revendications

1. Cassette à film radiographique comprenant deux demi-cassettes entourant un espace étanche à la lumière, caractérisée par un élément (11, 11'; 21; 40), mobile par rapport à la face extérieure de la cassette, qui prend une première position preceptible lorsque la cassette est chargée et une seconde position perceptible lorsqu'elle ne l'est pas, et en face de l'élément (11, 11'; 21; 40) mobile guidé dans l'une des demi-cassettes, de préférence dans le couvercle (4; 41) de la cassette, est ménagée dans l'autre demi-cassette (1; 36) une cavité (14; 42), qui est recouverte par le film (16; 38) lorsque celui-ci se trouve dans la cassette et qui reçoit l'extrémité intérieure de l'élément mobile lorsqu'il n'y a pas de film.

2. Cassette à film suivant la revendication 1, carctérisée en ce que la longueur de l'élément (11') mobile suivant la direction de déplacement peut être modifiée.

3. Cassette à film suivant la revendication 2, caractérisée en ce que la modification de longueur peut être effectuée à l'aide d'une vis (17) de réglage.

4. Cassette à film suivant la revendication 1, caractérisée en ce que l'élément (21) mobile avec un ressort (13') est logé dans un corps (18) de guidage, qui est mobile dans la même direction et qui est pressé sur l'autre demi-cassette (1) par la force d'un autre ressort (19) plus fort.

5. Cassette à film suivant la revendication 4, caractérisée en ce que le corps (18) de guidage est guidé dans des évidements (8', 9') de l'une des demi-cassettes (4) et l'élément (21) mobile est guidé d'une part dans un évidement (20) du corps (18) de guidage et d'autre part dans une rondelle (23) annulaire.

6. Cassette à film suivant l'une des revendications 1 à 5, caractérisée en ce que l'élément mobile est un axe ou une broche (21) qui, en une position, vient dans un renforcement (7') ménagé sur la face (5) extérieure de la cassette, tandis qu'en l'autre position il en fait saillie.

7. Cassette à film suivant l'une des revendications 1 à 5, caractérisée en ce que l'élément mobile est un axe ou une broche (11; 11') à tête (11a) plate, qui en une position s'abaisse dans un renforcement (7) ménagé sur la face (5) extérieure de la cassette et, dans l'autre position, remplit ce renfoncement (7).

8. Cassette à film suivant l'une des revendications 1 à 7, caractérisée en ce que l'élément (11; 11'; 21) mobile est mis en la seconde position à l'aide de la force d'un ressort (13; 13') et en la première position par le film (18) à l'encontre de la force du ressort (13; 13').

9. Cassette à film suivant la revendication 1, caractérisée en ce que l'élément (40) mobile est relié à un organe (33), ayant l'élasticité du caoutchouc, monté sur la paroi intérieure d'une partie (31) de cassette, et présente, dans la région de l'élément (40) mobile de cette partie (31) de cassette, une surélévation (32) tournée vers l'extérieur.

10. Cassette à film suivant la revendication 9, caractérisée en ce que l'élément (40) mobile est d'une pièce avec l'organe (33) ayant l'élasticité du caoutchouc.

11. Cassette à film suivant la revendication 9 ou 10, caractérisée en ce que l'élément (40) mobile a une forme cylindrique et s'étend des deux côtés de l'organe (33) élastique en forme de plaque.

12. Cassette à film suivant la revendication 11, caractérisée en ce que l'une des extrémités (40a) de l'élément (40) cylindrique fait saillie par un alésage (41) dans la surélévation (32) de la partie (31) de la cassette et, lorsque la cassette n'est pas chargée, se trouve à peu près dans le plan de la face extérieure de la surélévation (32), tandis que l'autre extrémité (40b) de l'élément (40) repose dans la cavité (42) de l'autre partie (36) de la cassette.

13. Cassette à film suivant la revendication 12, caractérisée en ce que, lorsque la cassette est chargée, l'organe (33) ayant l'élasticité du caoutchouc se voûte dans la surélévation (32) de la partie (31) de la cassette, tandis que l'extrémité (40a) tournée vers l'extérieur de l'élément (40) mobile fait saillie au-dessus de la surélévation (32) d'une manière qui peut être perçue au toucher.

14. Cassette à film suivant la revendication 7 ou 12, caractérisée en ce que la face cylindrique de l'élément (21; 40) mobile a une autre couleur que la face du renforcement (7; 41) et que la face (5; 32) extérieure de la cassette.

15. Cassette à film suivant l'une des revendications 1 à 14, caractérisée en ce que le dispositif indiquant le film est logé, avec l'élément (11; 11'; 21) mobile, dans une fenêtre (5) pour des données sur les patients.

FIG.1

FIG.2

Fig. 3

## Fig. 4

## Fig. 5

## Fig.6

## Fig.7